Europäisches Patentamt

European Patent Office

Office européen des brevets

(19)

(11) Veröffentlichungsnummer: **0 125 394 B1**

(12) **EUROPÄISCHE PATENTSCHRIFT**

(45) Veröffentlichungstag der Patentschrift: **13.11.91**

(51) Int. Cl.5: **A01M 7/00, B05B 12/00, B05B 1/14**

(21) Anmeldenummer: **84101560.5**

(22) Anmeldetag: **15.02.84**

(54) **Vorrichtung zum gleichmässigen Ausbringen von Flüssigkeiten bei Pflanzenschutzspritzen und Flüssigdüngergeräten mit mehreren Verteilerdüsen.**

(30) Priorität: 16.02.83 DE 3305258
05.03.83 DE 3307922
18.01.84 DE 3401504

(43) Veröffentlichungstag der Anmeldung:
**21.11.84 Patentblatt 84/47**

(45) Bekanntmachung des Hinweises auf die
Patenterteilung:
**13.11.91 Patentblatt 91/46**

(84) Benannte Vertragsstaaten:
**CH DE FR GB IT LI**

(56) Entgegenhaltungen:
**DE-A- 1 782 439**
**FR-A- 1 574 962**
**US-A- 3 512 714**
**US-A- 3 550 854**

(73) Patentinhaber: **Nusser, Josef**
**Hauptstrasse 9**
**W-7963 Eichstegen(DE)**

(72) Erfinder: **Nusser, Josef**
**Hauptstrasse 9**
**W-7963 Eichstegen(DE)**

**Beschreibung**

Die Erfindung bezieht sich auf eine Vorrichtung zum gleichmäßigen Ausbringen von Flüssigkeiten bei Pflanzenschutzspritzen und Flüssigdüngergeräten. Dabei ist das in gewissen Abständen mit Düsen versehene Spritzgestänge an einem Fahrzeug befestigt, wobei die Düsen mit der Ausbringflüssigkeit versorgt werden.

Derartige Geräte ermöglichen in der Landbewirtschaftung eine flächige Ausbringung von Flüssigkeiten. Zur Behandlung von Baum und Rebanlagen wird durch geeignete Anordnung der Düsen eine räumliche Ausbringung erreicht. Dabei wird die auszubringende Flüssigkeit durch eine Pumpe unter Druck gesetzt und den über eine Leitung miteinander verbundenen Düsen zugeführt.

Es hat sich gezeigt, daß die Ausbringmenge zwischen den einzelnen Düsen und auf die vorgesehene Fläche nicht der gewünschten Genauigkeit entspricht. Dies ist deshalb der Fall, weil durch den Strömungswiderstand die von der Pumpe weiter entfernten Düsen mit geringerem Druck beaufschlagt werden und bei Hanglagen eine natürliche Druckdifferenz dazukommt. Ebenso wirken sich uneinheitliche Düsenquerschnitte die durch Abnützung, Ablagerungen und teilweise Verstopfungen oder Beschädigungen verursacht sein können ungünstig aus.

Hier will die Erfindung Abhilfe schaffen. Die Erfindung, wie sie in den Ansprüchen gekennzeichnet ist, löst die Aufgabe, eine Vorrichtung zum gleichmäßigen Ausbringen von Flüssigkeiten bei Pflanzenschutzspritzen und Flüssigdüngergeräten mit mehreren Verteilerdüsen zu schaffen, bei der die zu behandelnde Fläche gleichmäßig mit der vorgesehenen Menge Ausbringflüssigkeit benetzt wird, indem jede zu speisende Düse mit der gleichen Menge Ausbringflüssigkeit versorgt wird. Dies geschieht dadurch, daß der für mehrere Düsen vorgesehene Volumenstrom durch den Stromteiler in gleiche Teilströme aufgeteilt den Düsen zugeführt wird der Stromteiler für jeden Teilstrom eine Verdrängereinheit aufweist. Bei Anwendungsfällen, wo die Gesamtarbeitsbreite in mehrere zu- und abschaltbare Teilbreiten aufgeteilt ist, wird der Volumenstrom mittels Stromteiler entsprechend der Anzahl und Größe der Teilbreiten aufgeteilt. Um die Vorrichtung weiter zu vereinfachen, werden die Teilströme für die Teilbreiten oder die Düsen, direkt von der als Stromteiler ausgebildeten Pumpe erzeugt. Die Durchsatzmenge ist durch Bewertung der Frequenz und des Verdrängungsvolumens der Verdrängerelemente exakt gegeben. Der für Rotationsdüsen erforderliche Antrieb wird erreicht, indem die Ausbringflüssigkeit zunächst den mit den Rotationsdüsen antriebsverbundenen Hydromotor speist und dann den Rotationsdüsen zugeleitet wird.

Die durch die Erfindung erreichten Vorteile sind im wesentlichen darin zu sehen, daß es nunmehr möglich ist, die aufgrund bestimmter Kriterien als optimal erkannte Dosis mit Pflanzenschutzmitteln oder Pflanzennährstoffen vermischte Flüssigkeit einschließlich flüssigen Naturdünger exakt auszubringen. Dies ist von Wichtigkeit, weil die Wirkstoffe teuer sind und schon bei geringfügiger Abweichung von der vorgesehenen Ausbringmenge in ihrer Wirkung erheblich nachlassen oder die Kulturpflanzen den Boden und die Umwelt zu sehr beeinträchtigen.

In den Zeichnungen sind einige Ausführungsbeispiele der Erfindung dargestellt und in der Beschreibung näher erläutert. Es zeigt:

Fig. 1 eine schematische Darstellung von Motor, Pumpe, Stromteiler, Leitungen und Düsen,

Fig. 2 die aus mehreren Pumpeneinheiten bestehende Pumpe,

Fig. 3 die Vorrichtung mit zusätzlichem Stromteiler zwischen Pumpe und Teilbreitenstromteiler,

Fig. 4 Versorgungsschema der Teilbreitenstromteiler mittels mehrerer Pumpeneinheiten,

Fig. 5 die schematische Darstellung eines Zahnradstromteilers bzw. Zahnradpumpe mit mehreren Verdrängereinheiten.

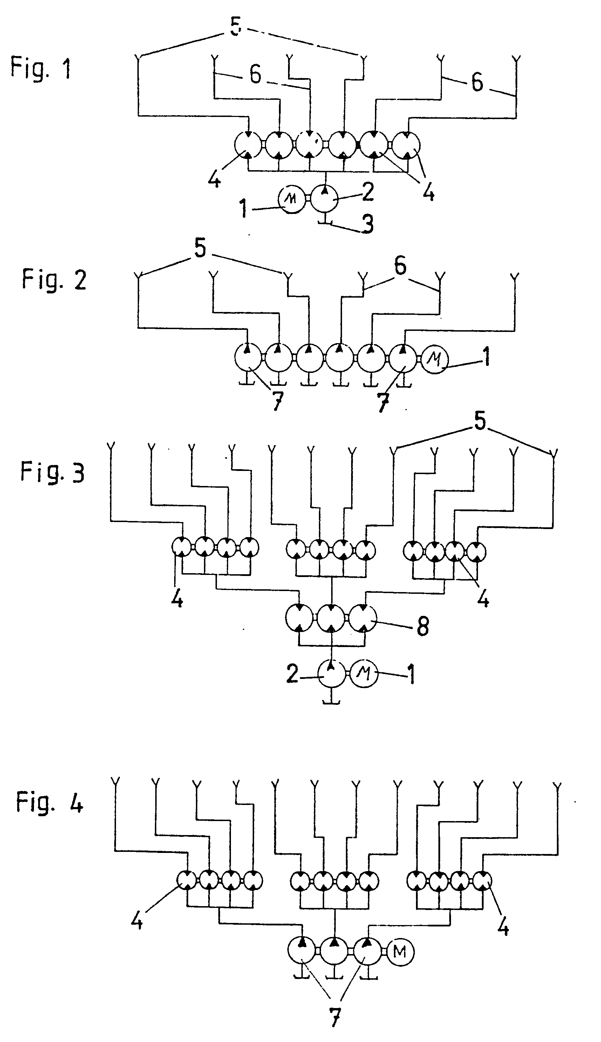

Bei der in der Fig. 1 gezeigten Ausgestaltung fördert die vom Motor 1 angetriebene Pumpe 2 die über den An saugstutzen 3 zugeführte Flüssigkeit zu dem aus Verdrängereinheiten bestehenden Stromteiler 4. Dieser Stromteiler 4 teilt den zugeführten Volumenstrom in entsprechend der Anzahl der dem Stromteiler 4 zugeordneten Düsen 5 auf, wobei die Flüssigkeit über Leitungen 6 den Düsen 5 zugeführt wird. Der Stromteiler 4 wirkt volumetrisch, so daß auch bei gegebenenfalls auftretenden Druckschwankungen zwischen den Leitungen 6, die zu den Düsen 5 geförderte Flüssigkeitsmenge immer identisch ist.

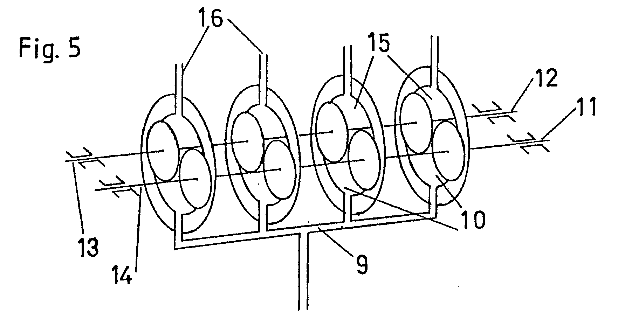

Wie in der Fig. 2 gezeigt, kann die für jede Düse 5 bestimmte Flüssigkeitsmenge durch einzelne Pumpeneinheiten 7 getrennt gefördert und über Leitungen 6 den Düsen 5 zugeführt werden.

Das Ausführungsbeispiel Fig. 3 weist drei voneinander getrennte Teilbreiten auf, wobei jede Teilbreite aus vier Düsen 5 besteht und jeder Teilbreite ein aus Verdrängereinheiten gebildeter Stromteiler 4 zugeordnet ist. Zur gleichmäßigen Versorgung der Stromteiler 4 ist zwischen denselben und der Pumpe 2 ein Stromteiler 8 zwischengeschaltet.

In der Fig. 4 ist die gleichmäßige Versorgung der getrennten Teilbreiten durch die aus mehreren Pumpeneinheiten 7 zusammengesetzte Pumpe gezeigt. Die Fördermenge jeder Pumpeneinheit 7 ist auf die zur Versorgung der zugeordneten Teilbreite vorgesehene Menge abgestimmt.

Ein Zahnradstromteiler zur Aufteilung eines Volumenstromes in mehrere Teilströme ist in der Fig. 5 veranschaulicht. Die Flüssigkeit wird über die Rohrleitung 9 dem Kammerteil 10 zugeführt und treibt die auf den Wellen 11, 12 befestigten Zahnräder 13, 14 an und gelangt so, aufgeteilt in die Kammerteile 15 und anschließend in die Leitungen 16 die direkt zu den Düsen 5 oder einem zwischengeschalteten Stromteiler 4 führen.

## Patentansprüche

1. Vorrichtung zum gleichmäßigen Ausbringen von Flüssigkeiten bei Pflanzenschutzspritzen und Flüssigdüngergeräten mit mehreren Verteilerdüsen, dadurch gekennzeichnet, daß der für mehrere Verteilerdüsen (5) vorgesehene Volumenstrom mittels eines volumetrisch wirksamen Stromteilers (4) entsprechend der Anzahl der Verteilerdüsen (5)in gleiche Teilströme aufgeteilt und den Verteilerdüsen (5) zugeführt wird, wobei der volumetrisch wirksame Stromteiler (4) für jeden Teilstrom eine Verdrängereinheit aufweist.

2. Vorrichtung nach Patentanspruch 1, dadurch gekennzeichnet, daß sich die Geamtarbeitsbreite aus mehreren Teilbreiten zusammensetzt und jede dieser Teilbreiten für sich mit Flüssigkeit versorgt wird.

3. Vorrichtung nach Patentansprüchen 1 und 2, dadurch gekennzeichnet, daß ein für mehrere Teilbreiten vorgesehener Volumenstrom entsprechend der Anzahl und Größe der Teilbreiten, mittels eines volumetrisch wirksamen Stromteilers (8) in gleiche oder proportionale Teilströme aufgeteilt und den Teilbreiten zugeführt wird.

4. Vorrichtung nach Patentansprüchen 1 bis 3, dadurch gekennzeichnet, daß eine Förderpumpe für jede zu versorgende Verteilerdüse (5) eine Pumpeneinheit (7) aufweist.

5. Vorrichtung nach Patentansprüchen 1 bis 4, dadurch gekennzeichnet, daß eine Förder pumpe für jede zu versorgende Teilbreite eine Pumpeneinheit (7) aufweist.

6. Vorrichtung nach Patentansprüchen 1 bis 5, dadurch, gekennzeichnet, daß das Verdrängungsvolumen der Verdrängereinheiten in Verbindung mit der Frequenz der Verdrängerelemente als Maß für die Durchsatzmenge benutzt wird.

7. Vorrichtung nach Patentansprüchen 1 bis 6, dadurch gekennzeichnet, daß die Stromteiler (4, 8) durch den Volumenstrom antreibbar sind.

8. Vorrichtung nach Patentansprüchen 1 bis 7, dadurch gekennzeichnet, daß die druckbeaufschlagten Teilströme Hydromotore speisen und dann den von den Hydromotoren rotierend antreibbaren Zerstäubungselementen zugeführt werden.

## Claims

1. Device for even spreading of liquids for use on crop sprayers and liquid manure spreaders with a number of distribution nozzles, characterised by the fact that the volume flow intended for a number of distribution nozzles (5) is divided by a volumetrically operating flow divider (4) into equal partial flows according to the number of distribution nozzles (5) and led to the distribution nozzles (5), with each volumetrically operating flow divider (4) having a displacement unit for each partial flow.

2. Device according to Claim 1, characterised by the fact that the total working width is composed of a number of partial widths, and each of these partial widths is individually supplied with liquid.

3. Device according to Claims 1 and 2, characterised by the fact that a volume flow intended for a number of partial widths according to the quantity and size of the partial widths is divided by a volumetrically operating flow divider (8) into equal or proportional partial flows and led to the partial widths.

4. Device according to Claims 1 to 3, characterised by the fact that a feed pump has a pump unit (7) for each distribution nozzle (5) to be supplied.

5. Device according to Claims 1 to 4, characterised by the fact that a feed pump has a pump unit (7) for each partial width to be supplied.

6. Device according to Claims 1 to 5, characterised by the fact that the displacement volume of the displacement units is used in conjunction with the frequency of the displacement elements as a measure of the flow quantity.

7. Device according to Claims 1 to 6, characterised by the fact that the flow dividers (4, 8) are driven by the volume flow.

8. Device according to Claims 1 to 7, characterised by the fact that the pressurised partial flows feed hydromotors and are then led to the rotary spray elements driven by the hydromotors.

**Revendications**

1. Dispositif pour l'épandage régulier de liquides pour pulvérisateurs de produits phytosanitaires et distributeurs d'engrais liquides, comportant plusieurs buses de distribution, caractérisé en ce que le flux volumique prévu pour plusieurs buses distributrices (5) est divisé en flux partiels égaux au moyen d'un répartiteur (4) à action volumétrique, en fonction du nombre de buses distributrices (5), et amené à ces mêmes buses distributrices (5), tandis que le répartiteur (4) à action volumétrique présente une unité de refoulement pour chaque flux partiel.

2. Dispositif selon la revendication 1, caractérisé en ce que la largeur totale de travail est composée de plusieurs segments et que chacun de ces segments est alimenté séparément en liquide.

3. Dispositif selon les revendications 1 et 2, caractérisé en ce qu un flux volumique prévu pour plusieurs segments est divisé, au moyen d'un répartiteur (8) à action volumétrique, en flux partiels égaux ou proportionnels en fonction du nombre et de la taille des segments, et est amené aux segments.

4. Dispositif selon les revendications 1 à 3, caractérisé en ce qu'une pompe d'alimentation comporte une unité de pompage (7) pour chaque buse distributrice à alimenter (5).

5. Dispositif selon les revendications 1 à 4, caractérisé en ce qu'une pompe d'alimentation comporte une unité de pompage (7) pour chaque segment à alimenter.

6. Dispositif selon les revendications 1 à 5, caractérisé en ce que le volume de refoulement des unités de refoulement est utilisé, en liaison avec la fréquence des éléments refouleurs, comme valeur de référence pour le débit.

7. Dispositif selon les revendications 1 à 6, caractérisé en ce que les répartiteurs (4, 8) peuvent être entraînés par le flux volumique.

8. Dispositif selon les revendications 1 à 7, caractérisé en ce que les flux partiels soumis à une pression alimentent des moteurs hydrauliques et sont ensuite amenés aux éléments de pulvérisation dont la rotation peut être produite par les moteurs hydrauliques.

Fig. 1

Fig. 2

Fig. 3

Fig. 4

Fig. 5